# EUROPEAN PATENT SPECIFICATION

(11) **EP 2 357 106 B1**
(45) Date of publication and mention of the grant of the patent: **11.06.2014**
(21) Application number: 09827469.9
(22) Date of filing: 28.10.2009
(51) Int. Cl.: B60K 11/06, B60K 1/04, B60K 6/48, B60K 6/54, B60L 11/14, B60W 10/08, B60W 10/18, B60W 10/30, B60W 20/00, B60L 3/12, B60L 11/18, B60W 10/26

(54) **CAPACITOR COOLING DEVICE**
KONDENSATORKÜHLVORRICHTUNG
DISPOSITIF DE REFROIDISSEMENT POUR CONDENSATEUR

(30) Priority: 21.11.2008 JP 2008298218
(43) Date of publication of application: 17.08.2011
(73) Proprietor: Honda Motor Co., Ltd., Minato-ku Tokyo 107-8556 (JP)
(72) Inventor: KATONO, Yoshihisa, Saitama 351-0193 (JP); OGANE, Takashi, Saitama 351-0193 (JP); FUJITA, Yuji, Saitama 351-0193 (JP)
(74) Representative: Beder, Jens
(86) International application number: PCT/JP2009/068527
(87) International publication number: WO 2010/058688

(56) References cited:
- WO-A1-2008/117648
- JP-A- 2005 063 682
- JP-A- 2006 121 786
- JP-A- 2006 151 039
- JP-A- 2007 151 397
- JP-A- 2007 331 737
- JP-A- 2008 253 038
- JP-A- 2008 278 705
- US-B1- 6 422 331

## Description

### Technical Field

The present invention relates to a battery unit cooling apparatus for supplying sufficient cooling air to a battery unit when decelerating a vehicle which is set to operate in a high regenerative energy recovery efficiency mode.

### Background Art

In a cooling apparatus of a hybrid vehicle disclosed in Patent Document 1, as is described in paragraphs "0058" and "0059" in Patent Document 1, when decelerating the vehicle, TL (a lower limit temperature for low operation of an air conditioner) and TH (a lower limit temperature for high operation of the air conditioner) are both corrected by a predetermined amount to a high temperature side. By this correction, wasteful driving of an electric fan can be avoided to reduce noise while preventing overcooling.

In addition, in a seat heating/cooling apparatus disclosed in Patent Document 2, quietness is attained by controlling a blower installed in a vehicle so that noise generated from the blower becomes lower than noise generated from other apparatus.

In either of Patent Documents 1 and 2, an increase in NV (Noise Vibration) performance, based on which the driver's comfortableness in the vehicle is evaluated, is attained by reducing the noise generated from the fan. However, neither of the patent documents is intended for application to EV's (Electric Vehicles) and HEV's (Hybrid Electric Vehicles).

JP 2006121786 discloses a battery unit cooling apparatus according to the preamble of claim 1 and claim 2.

In vehicles such as EV's and HEV's (hereinafter, referred to simply as "vehicle"), there are provided with an electric motor as a drive source, a battery unit for supplying electric power to the electric motor and the like, a fan for cooling the battery unit and a control unit for controlling a rotation speed of the fan in accordance with running conditions of the vehicle. The battery unit is composed of a plurality of secondary batteries such as nickel hydrogen batteries or lithium ion batteries which are connected in series. Consequently, when the electric motor is made to function as a generator when the vehicle is decelerated, generated electric power can be recovered to the battery unit as generative energy.

However, when regenerative electric power (charged electric power) is large which results when regenerative energy is recovered to the battery unit, the battery unit is heated to emit heat. Since an output performance of the secondary batteries which make up the battery unit depends on temperature, in the event that the temperature of the battery unit is so high as to equal or exceed a predetermined value, the output performance of the battery unit is reduced. Consequently, the battery unit is cooled by the fan when the vehicle is decelerated. However, since air noise from the fan and drive noise from a fan motor are causes for reducing the NV performance of the vehicle, as is done in Patent Document 1 and Patent Document 2, the driving of the fan is desirably controlled in accordance with the running conditions of the vehicle.

### Related Art Document

### Patent Document

Patent Document 1: JP-A-H11-285106
Patent Document 2: JP-A-2006-27518

### Summary of the Invention

### Problem that the Invention is to Solve

In the vehicles such as EV's and HEV's described above, it is considered that there are some vehicles which the driver can set to either of two modes: a fuel efficiency preference mode in which regenerative energy is recovered with high efficiency when the vehicle is decelerated; and a normal mode in which the regenerative energy recovery efficiency is lower than the fuel efficiency preference mode. When the cooling system of Patent Document 1 or the seat heating/cooling system of Patent Document 2 is installed in such a vehicle, the NV performance takes priority over the cooling performance of cooling the battery unit even when decelerating the vehicle in which the fuel efficiency preference mode is selected. Namely, the fan is not controlled so as to supply air required to cool the battery unit sufficiently. As a result, the temperature of the battery unit is increased.

An object of the invention is to provide a battery unit cooling apparatus which can supply sufficient cooling air to a battery unit when decelerating a vehicle which is set to operate in a high regenerative energy recovery efficiency mode.

### Means for Solving the Problem

With a view to attaining the object by solving the problem described above, according to a first aspect of the invention, there is provided a battery unit cooling apparatus as defined by the features of claim 1 installed in a vehicle which can run on power from an electric motor (for example, an electric motor M in an embodiment) driven by a battery unit (for example, a battery unit 103 in the embodiment) as a power supply, characterized by comprising a cooling air generating unit (for example, a cooling fan 113 in the embodiment) for generating cooling air to cool the battery unit and an air volume control unit (for example, a control unit 117 in the embodiment) for controlling the cooling air generating unit so as to generate the cooling air whose volume is reduced with lowering of a running speed of the vehicle at least in a predetermined vehicle speed region, wherein the air volume control unit controls, when decelerating the vehicle which is set to operate in a high recovery efficiency mode of two modes which differ in recovery efficiency with which regenerative energy obtained from the electric motor when the vehicle is decelerated is recovered to the battery, the cooling air generating unit so as to generate a larger volume of cooling air than a volume of cooling air generated when the vehicle is set to operate in a low recovery efficiency mode.

In addition, according to a second aspect of the invention, there is provided a battery unit cooling apparatus as defined by the features of claim 2 installed in a vehicle which can run on power from an electric motor (for example, an electric motor M in an embodiment) driven by a battery unit (for example, a battery unit 103 in the embodiment) as a power supply, characterized by comprising a cooling air generating unit (for example, a cooling fan 113 in the embodiment) for generating cooling air to cool the battery unit and an air volume control unit (for example, a control unit 117 in the embodiment) for controlling the cooling air generating unit so as to generate a predetermined volume of cooling air which differs in accordance with a running speed of the vehicle, and characterized in that the air volume control unit controls, when decelerating the vehicle which is set to operate in a low recovery efficiency mode of two modes which differ in recovery efficiency with which regenerative energy obtained from the electric motor when the vehicle is decelerated is recovered to the battery, the cooling air generating unit so as to generate a volume of cooling air which results by multiplying the predetermined volume by a first correction factor which differs in accordance with a running speed of the vehicle and controls the cooling air generating unit so as to generate the predetermined volume of cooling air or a volume of cooling air which results by multiplying the predetermined volume by a second correction factor which is larger than the first correction factor when decelerating the vehicle which is set to operate in a high recovery efficiency mode.

Further, according to third and fourth aspects of the invention, there is provided a battery unit cooling apparatus as set forth in the first and second aspects, characterized in that the high recovery efficiency mode or the low recovery efficiency mode is set through an operation by the driver.

Furthermore, according to fifth and sixth aspects of the invention, there is provided a battery unit cooling apparatus as set forth in the first and second aspects, characterized in that the vehicle comprises an internal combustion engine having a drive shaft directly coupled to a drive shaft of the electric motor.

### Advantage of the Invention

According to the battery unit cooling apparatus set forth in the first to sixth aspects of the invention, sufficient cooling air can be supplied to the battery unit when decelerating the vehicle which is set to operate in the high regenerative energy recovery mode.

### Brief Description of the Drawings

Fig. 1 is a block diagram showing an example of an internal configuration of a vehicle which includes a battery unit cooling apparatus of an embodiment according to the invention.
Fig. 2 is a chart showing an example of a relationship between vehicle speeds of vehicles which are set to operate in a fuel efficiency preference mode and a normal mode, respectively, which result when the vehicles are decelerated and regenerative energy.
Fig. 3 is a chart showing an example of a relationship between vehicle speed and duty ratio based on a vehicle speed/duty ratio map.
Fig. 4 is a chart showing an example of a relationship between vehicle speed and correction factor for duty ratio when decelerating the vehicle which is set to operate in the normal mode.
Fig. 5 is a chart showing by a dotted line a relationship between correction duty ratio obtained by multiplying the duty ratio shown in Fig. 3 by the correction factor shown in Fig. 4 and vehicle speed.
Fig. 6 is a chart showing a first example of a relationship between vehicle speed and duty ratio when decelerating the vehicle which is set to operate in the fuel efficiency preference mode.
Fig. 7 is a chart showing by a dotted line a second example of a relationship between vehicle speed and duty ratio when decelerating the vehicle which is set to operate in the fuel efficiency preference mode.
Fig. 8 is a flowchart showing operations of a control unit included in a vehicle of the embodiment.
Fig. 9 is a chart showing a first example of a change with time of running conditions of the vehicle of the embodiment and duty ratio.
Fig. 10 is a chart showing a second example of a change with time of running conditions of the vehicle of the embodiment and duty ratio.

### Mode for Carrying out the Invention

Hereinafter, an embodiment of the invention will be described by reference to the drawings. A battery unit cooling apparatus which will be described below is installed in a vehicle such as an EV (Electric Vehicle) or HEV (Hybrid Electric Vehicle) in which an electric motor driven on electric power supplied from the battery unit is provided as a power source.

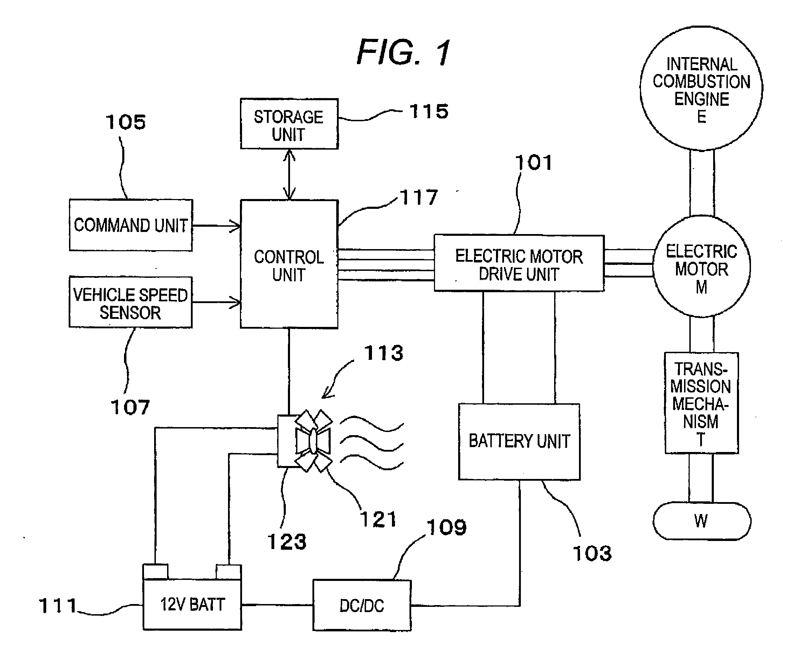

Fig. 1 is a block diagram showing an example of an internal configuration of a vehicle which includes a battery unit cooling apparatus of an embodiment according to the invention. The vehicle shown in Fig. 1 includes mainly an internal combustion engine E, an electric motor M, a transmission mechanism T, drive wheels W, an electric motor drive unit 101, a battery unit 103, a command unit 105, a vehicle speed sensor 107, a DC-DC converter 109, an auxiliary battery unit 111, a cooling fan 113, a storage unit 115, and a control unit 117. An output voltage of the battery unit 113 is a high voltage (for example, 100 to 200V), while an output voltage of the auxiliary battery unit 111 is a low voltage (for example, 12V).

The vehicle shown in Fig. 1 is a parallel type hybrid vehicle (hereinafter, referred to simply as a "vehicle") in which the internal combustion engine E, the electric motor M and the transmission mechanism T are directly coupled together in series. In this type of vehicle, drive force from both the internal combustion engine E and the electric motor M is transmitted to the drive wheels W via the transmission mechanism T. In addition, when the drive force is transmitted from the drive wheels W side to the electric motor M side when the vehicle is decelerated, the electric motor M functions as a generator and generates regenerative brake force, whereby kinetic energy of a vehicle body is recovered as electric energy (regenerative energy). Further, the electric motor M is driven as the generator by an output of the internal combustion engine E depending on driving conditions of the vehicle to thereby generate power-generating energy.

The driving and regenerative operations of the electric motor M are implemented by the electric motor drive unit 101 which receives a control command from the control unit 117. The battery unit 103, which stores power-generating energy and regenerative energy which are outputted from the electric motor M and supplies electric power to the electric motor M, is connected to the electric motor drive unit 101. The battery unit 103 is composed of a plurality of secondary batteries such as nickel hydrogen batteries or lithium ion batteries which are connected in series.

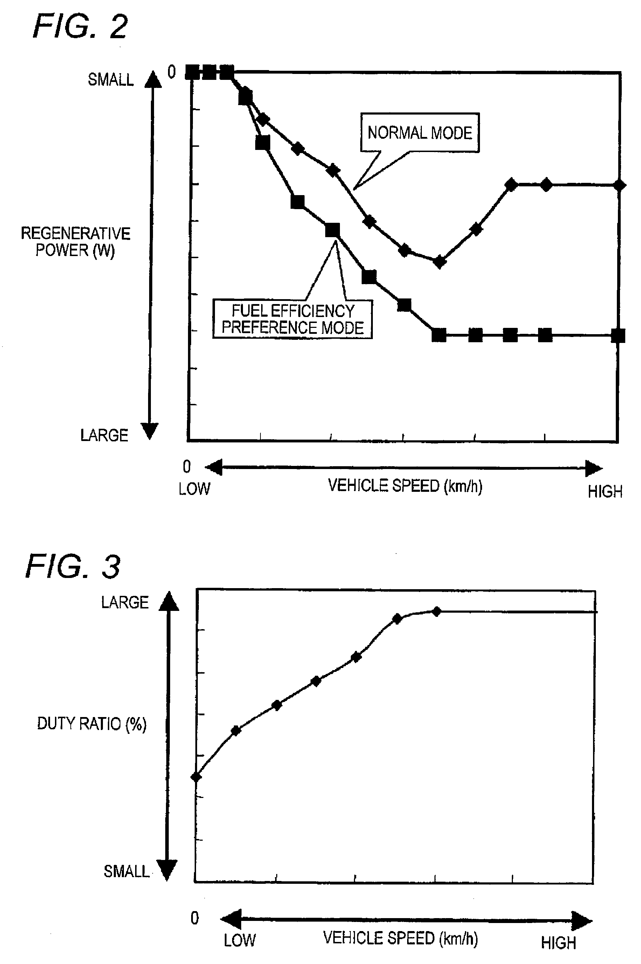

The command unit 105 outputs to the control unit 117 a signal regarding the setting of a mode selected by the driver of the vehicle from two modes which differ in recovery efficiency with which regenerative energy obtained from the electric motor M when the vehicle is decelerated. In this embodiment, the driver can select either of a "fuel efficiency preference mode" in which regenerative energy is recovered with high efficiency when the vehicle is decelerated and a "normal mode" in which the regenerative energy recovery efficiency is lower than the fuel efficiency preference mode. Fig. 2 is a chart showing an example of a relationship between vehicle speed and regenerative electric power when decelerating vehicles which are set to operate in the fuel efficiency preference mode and the normal mode, respectively. As shown in Fig. 2, higher regenerative electric power is obtained in the fuel efficiency preference mode than in the normal mode.

The vehicle speed sensor 107 detects a running speed (a vehicle speed) of the vehicle. A signal indicating the vehicle speed detected by the vehicle sensor 107 is inputted into the control unit 117.

The DC-DC converter 109 drops an output voltage of the battery unit 103 so as to store it in the auxiliary battery unit 111. Electric power is supplied to the cooling fan 113 from the auxiliary battery unit 111 and the cooling fan 113 generates cooling air to cool the battery unit 103. The cooling fan 113 has a fan 121 and a motor 123 for driving to rotate the fan 121. The motor 123 is PWM (Pulse Width Modulation) controlled by the control unit 117. Namely, the control unit 117 controls the rotation speed of the motor 123 by regulating a duty ratio. Since a change in rotation speed of the motor 123 changes the volume of cooling air, the control unit 117 can regulate the volume of cooling air by changing the duty ratio.

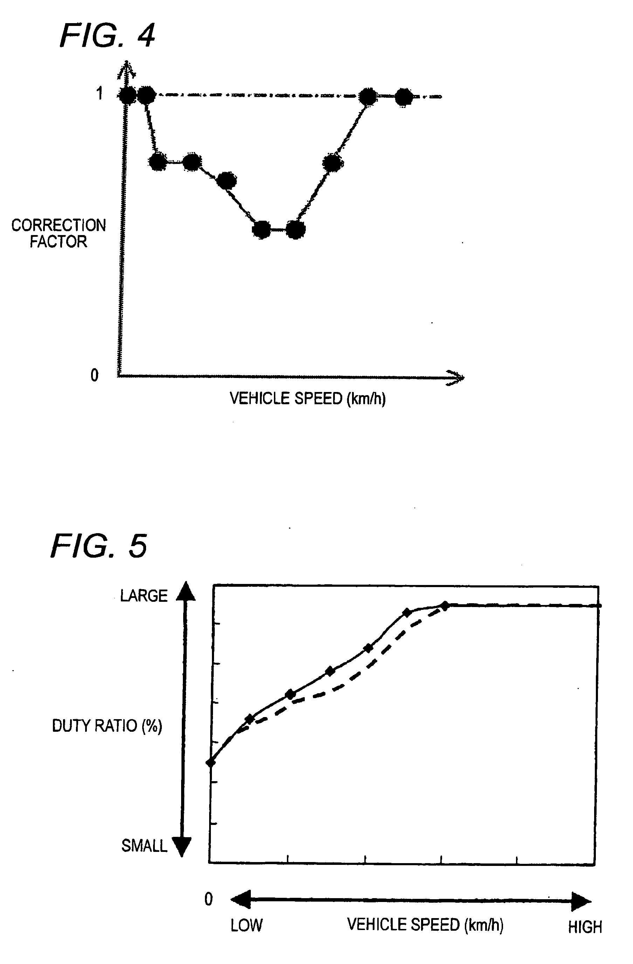

The storage unit 115 stores a map on which duty ratios relative to vehicle speeds are shown (hereinafter, referred to as a "vehicle speed/duty ratio map"). Fig. 3 shows an example of a relationship between vehicle speed and duty ratio based on the map. In addition, the storage unit 115 stores a map on which correction factors for duty ratios relative to vehicle speeds of vehicles which are set to operate in the fuel efficiency preference mode and the normal mode, respectively, when the vehicles are decelerated (hereinafter, referred to as a "vehicle speed/correction factor map"). Fig. 4 shows an example of a relationship between vehicle speed and correction factor of duty ratio when the vehicle is decelerated which is set to operate in the normal mode. In addition, Fig. 5 shows by a dotted line a relationship between the vehicle speed and corrected duty ratio obtained by multiplying the duty ratio shown in Fig. 3 by the correction factor shown in Fig. 4.

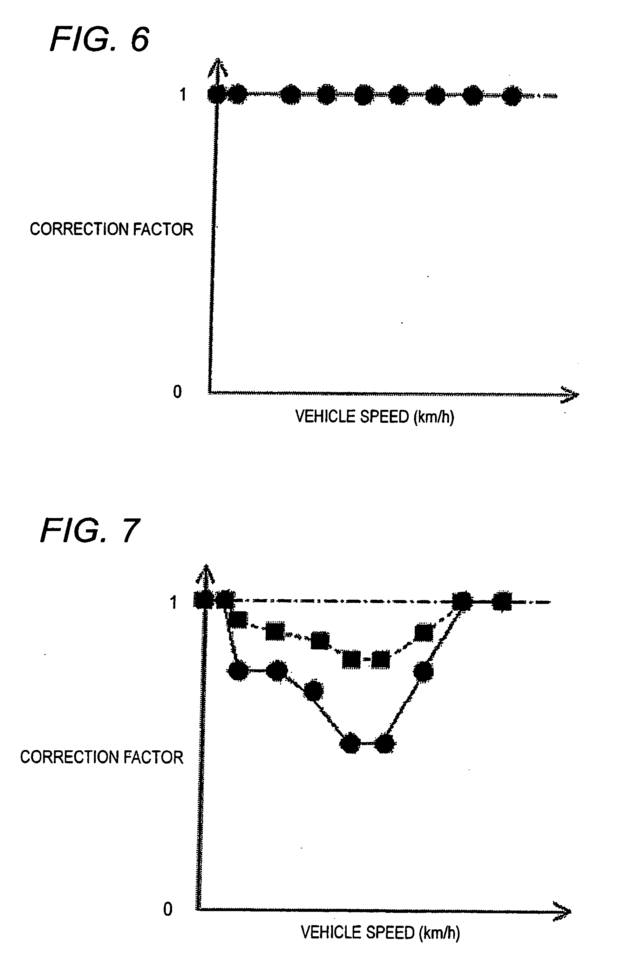

Fig. 6 is a chart showing a first example of a relationship between vehicle speed and correction factor of duty ratio when the vehicle is decelerated which is set to operate in the fuel efficiency preference mode. In the first example of vehicle speed/correction factor map, all correction factors for all vehicle speeds are set to 1. Consequently, the correction duty ratio is equal to a duty ratio which is induced based on the vehicle speed/duty ratio map.

Fig. 7 is a chart showing by a dotted line a second example of a relationship between vehicle speed and correction factor of duty ratio obtained when the vehicle is decelerated which is set to operate in the fuel efficiency preference mode. A solid line in Fig. 7 indicates a relationship between vehicle speed in the normal mode shown in Fig. 4 and correction factor. In the second example of vehicle speed/correction factor map shown in Fig. 7, a correction factor is set which is closer to 1 than the correction factor applied in the normal mode.

The control unit 117 generates a current command which designates a supply current for generating torque required by the electric motor M and outputs the current command to the electric motor drive unit 101. In addition, the control unit 117 induces a duty ratio which corresponds to the vehicle speed detected by the vehicle speed sensor 107 (hereinafter, referred to as a "source duty ratio") based on the vehicle speed/duty ratio map stored in the storage unit 115. Additionally, the control unit 117 determines a running condition of the vehicle which includes an accelerated condition, a cruising condition, a decelerated condition and a stopped condition based on a deviation in vehicle speed detected by the vehicle speed sensor 107.

Further, the control unit 117 induces a correction factor corresponding to the vehicle speed detected by the vehicle speed sensor based on the vehicle speed/correction factor map stored in the storage unit 115 which corresponds to the mode in accordance with the signal imputed from the command unit 105 when the running condition of the vehicle is the decelerated condition. The control unit 117 induces a correction duty ratio by multiplying the source duty ratio by the correction factor so induced.

The control unit 117 controls electric power that is supplied to the motor 123 of the cooling fan 113 from the auxiliary battery unit 111 based on the source duty ratio or the correction duty ratio induced in the way described above. Namely, the control unit 117 performs the control based on the source duty ratio when the vehicle is in the accelerated condition, the cruising condition and the stopped condition.

In addition, when the vehicle is in the decelerated condition, in the event that the vehicle is set to operate in the normal mode, the control unit 117 performs the control based on a duty ratio obtained by multiplying the source duty ratio by a correction factor obtained from the vehicle speed/correction factor map shown in Fig. 4. On the other hand, in the event that the vehicle is set to operate in the fuel efficiency preference mode, the control unit 117 performs the control based on a correction duty ratio obtained by multiplying the source duty ratio by a correction factor obtained from the first example of vehicle speed/correction factor map shown in Fig. 6 or the second example of vehicle speed/correction factor map shown in Fig. 7.

As an alternative method to the case in which the control unit 117 uses the first example of vehicle speed/correction factor map, the control unit 117 may use the source duty ratio as it is.

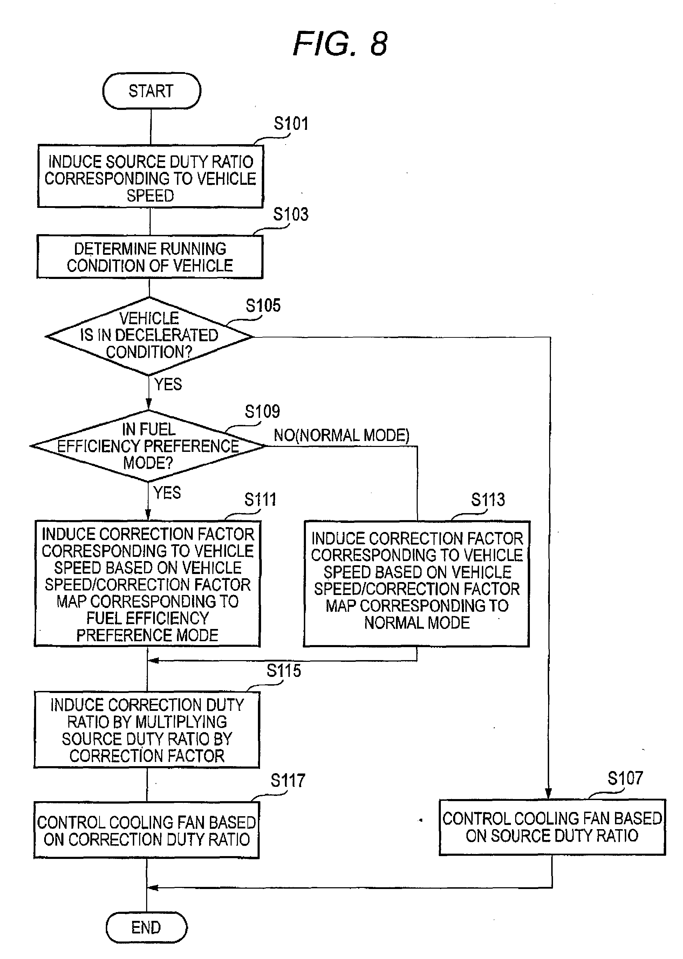

Fig. 8 is a flowchart showing operations of the control unit installed in the vehicle of the embodiment. As shown in Fig. 8, the control unit 117 induces the source duty ratio corresponding to the vehicle speed based on the vehicle speed/duty ratio map (step S101). Following this, the control unit 117 determines the running condition of the vehicle based on the deviation in vehicle speed (step S103). Next, the control unit 117 determines whether or not the running condition of the vehicle determined in step S103 is in the decelerated condition (step S105). If the running condition of the vehicle determined in step S105 is the decelerated condition, the operation flow proceeds to step S109, while if the running condition of the vehicle determined is in the other running conditions other than the decelerated condition, the operation flow proceeds to step S107.

In step S107, the control unit 117 controls the cooling fan 113 based on the source duty ratio induced in step S101. On the other hand, in step S109, the control unit 117 determines whether or not the mode in which the vehicle is set to operate is the fuel efficiency preference mode. If the mode set is the fuel efficiency preference mode, the operation flow proceeds to step S111, while if the mode is the normal mode, the operation flow proceeds to step S113.

In step S111, the control unit 117 induces a correction factor corresponding to the vehicle speed based on the vehicle speed/correction factor map which corresponds to the fuel efficiency preference mode. On the other hand, in step S113, the control unit 117 induces a correction factor corresponding to the vehicle speed based on the vehicle speed/correction factor map which corresponds to the normal mode. After having performed the operation in step S111 or step S113, the control unit 117 induces a correction duty ratio by multiplying the source duty ratio induced in step S101 by the correction factor induced in step S111 or step S113 (step S115). The control unit 117 controls the cooling fan 113 based on the correction duty ratio induced in step S115.

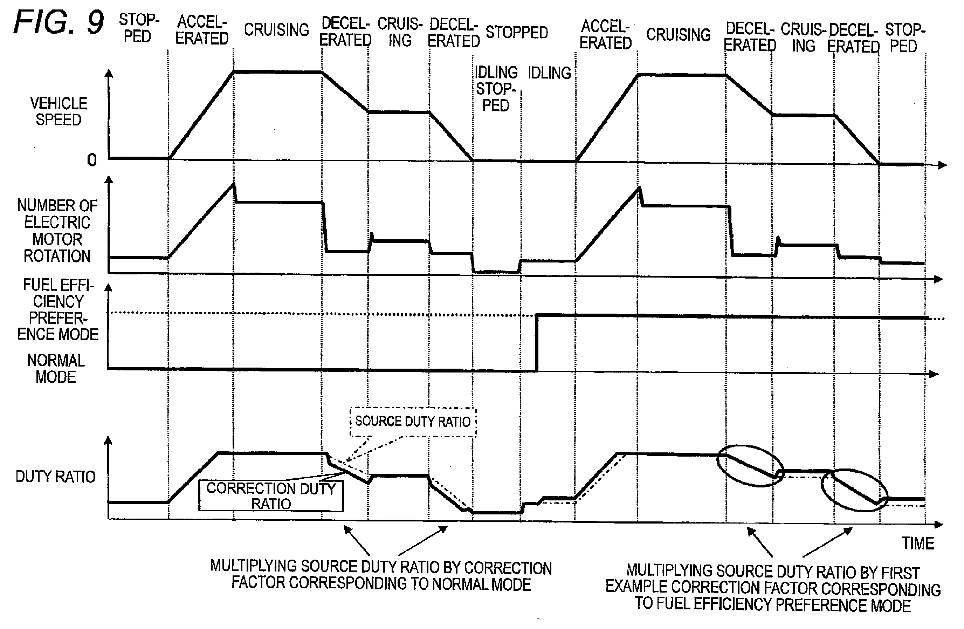

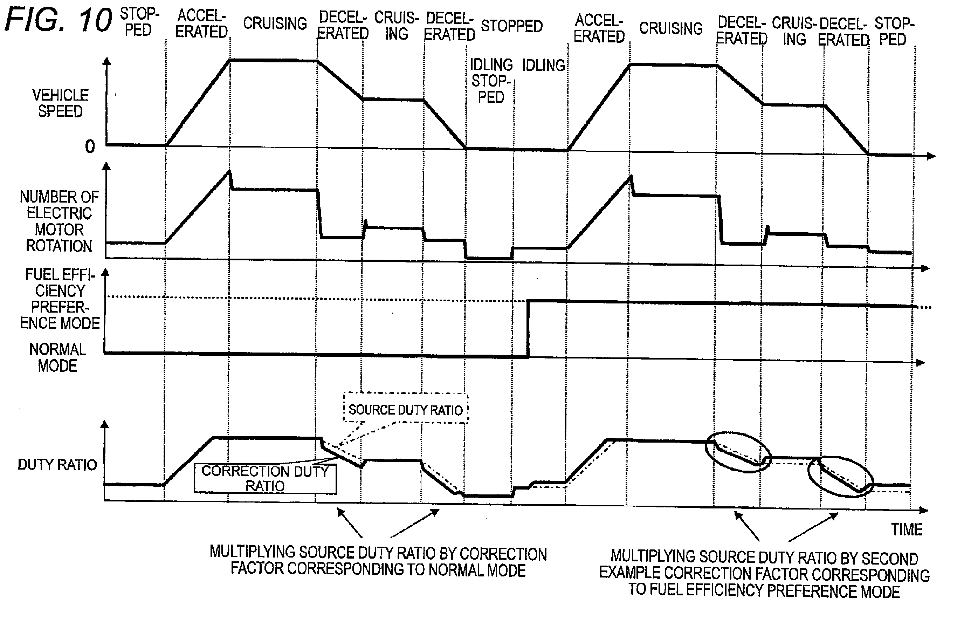

Figs. 9 and 10 each show a change with time in running condition and duty ratio of the vehicle of the embodiment. The example shown in Fig. 9 shows a case in which the correction duty ratio is induced by multiplying the source duty ratio by the correction factor obtained from the first example of vehicle speed/correction factor map described above when the vehicle is decelerated which is set to operate in the fuel efficiency preference mode. As it is obvious from portions encircled by ovals in Fig. 9, the correction duty ratio of the vehicle which is set to operate in the fuel efficiency preference mode which results when the vehicle is decelerated is equal to the source duty ratio. Consequently, compared with the case in which the vehicle is set in the normal mode, with the vehicle set to operate in the fuel efficiency preference mode, the volume of cooling air generated by the cooling fan 113 when the vehicle so set is decelerated is large.

In addition, the example shown in Fig. 10 shows a case in which the correction duty ratio is induced by multiplying the source duty ratio by the correction factor obtained from the second example of vehicle speed/correction factor map described above when the vehicle is decelerated which is set to operate in the fuel efficiency preference mode. As it is obvious from portions encircled by ovals in Fig. 10, the correction duty ratio of the vehicle which is set to operate in the fuel efficiency preference mode which results when the vehicle is decelerated is lower than the source duty ratio but is higher than the correction duty ratio of the vehicle which is set to operate in the normal mode which results when the vehicle is decelerated. Consequently, compared with the case in which the vehicle is set in the normal mode, with the vehicle set to operate in the fuel efficiency preference mode, the volume of cooling air generated by the cooling fan 113 when the vehicle so set is decelerated is large, although it is not as large as in the first example shown in Fig. 9.

Thus, as has been described heretofore, according to the vehicle incorporating the battery unit cooling apparatus of the embodiment, compared with where the vehicle is set to operate in the normal mode, with the vehicle set to operate in the fuel efficiency, the volume of cooling air is large even when the vehicle is decelerated. When the vehicle is set to operate in the fuel efficiency preference mode, the regenerative power that is recovered by the battery unit 103 is large. The heat value of the battery unit 103 then is larger than when the vehicle is set to operate in the normal mode. However, since the volume of cooling air is large, the temperature of the battery unit 203 can be suppressed to a predetermined value or smaller. As a result, the output performance of the battery unit 103 is not reduced by the recovery of regenerative energy.

### Description of Reference Characters and Numerals

- E: internal combustion engine
- M: electric motor
- T: transmission mechanism
- W: drive wheel
- 101: electric motor drive unit
- 103: battery unit
- 105: command unit
- 107: vehicle speed sensor
- 109: DC-DC converter
- 111: auxiliary batter unit
- 113: cooling fan
- 121: fan
- 123: motor
- 115: storage unit
- 117: control unit.

## Claims

1. A battery unit cooling apparatus installed in a vehicle which can run on power from an electric motor driven by a battery unit as a power supply, comprising:
a cooling air generating unit for generating cooling air to cool the battery unit; and
an air volume control unit for controlling the cooling air generating unit, **characterized in that**
the air volume control unit controls, when decelerating the vehicle which is set to operate in a high recovery efficiency mode of two modes which differ in recovery efficiency with which regenerative energy obtained from the electric motor when the vehicle is decelerated is recovered to the battery, the cooling air generating unit so as to generate a larger volume of cooling air than a volume of cooling air generated when the vehicle is set to operate in a low recovery efficiency mode.

2. A battery unit cooling apparatus installed in a vehicle which can run on power from an electric motor driven by a battery unit as a power supply, comprising:
a cooling air generating unit for generating cooling air to cool the battery unit; and
an air volume control unit for controlling the cooling air generating unit so as to generate a predetermined volume of cooling air which differs in accordance with a running speed of the vehicle, **characterized in that**
the air volume control unit controls, when decelerating the vehicle which is set to operate in a low recovery efficiency mode of two modes which differ in recovery efficiency with which regenerative energy obtained from the electric motor when the vehicle is decelerated is recovered to the battery, the cooling air generating unit so as to generate a volume of cooling air which results by multiplying the predetermined volume by a first correction factor which differs in accordance with a running speed of the vehicle, and
the air volume control unit controls, when decelerating the vehicle which is set to operate in a high recovery efficiency mode, the cooling air generating unit so as to generate the predetermined volume of cooling air or a volume of cooling air which results by multiplying the predetermined volume by a second correction factor which is larger than the first correction factor.

3. A battery unit cooling apparatus according to Claim 1, wherein
one of the high recovery efficiency mode and the low recovery efficiency mode is set through an operation by the driver.

4. A battery unit cooling apparatus according to Claim 2, wherein
one of the high recovery efficiency mode and the low recovery efficiency mode is set through an operation by the driver.

5. A battery unit cooling apparatus according to Claim 1, wherein
the vehicle includes an internal combustion engine having a drive shaft directly coupled to a drive shaft of the electric motor.

6. A battery unit cooling apparatus according to Claim 2, wherein
the vehicle includes an internal combustion engine having a drive shaft directly coupled to a drive shaft of the electric motor.

## Patentansprüche

1. Vorrichtung zur Kühlung einer Batterieeinheit, wobei die Vorrichtung in einem Fahrzeug installiert ist, das mit Energie von einem Elektromotor betrieben werden kann, der von einer Batterieeinheit als Energieversorgung angetrieben ist, aufweisend:
eine Kühllufterzeugungseinheit zum Erzeugen von Kühlluft um die Batterieeinheit zu kühlen; und
eine Luftvolumensteuerungseinheit zum Steuern der Kühllufterzeugungseinheit, **dadurch gekennzeichnet, dass**
beim Verlangsamen des Fahrzeugs, das in einem Modus hoher Rückgewinnungseffektivität von zwei Modi betrieben wird, die sich bezüglich der Rückgewinnungseffektivität unterscheiden, mit der regenerative Energie, die von dem Elektromotor erhalten wird, wenn das Fahrzeug verzögert wird, wieder der Batterie zugeführt wird, die Luftvolumensteuereinheit die Kühllufterzeugungseinheit so steuert, dass sie ein größeres Volumen von Kühlluft erzeugt als ein Volumen von Kühlluft, das erzeugt wird, wenn das Fahrzeug in einem Modus niedriger Rückgewinnungseffektivitätsmodus betrieben wird.

2. Vorrichtung zum Kühlen einer Batterieeinheit, wobei die Vorrichtung in einem Fahrzeug installiert ist, das mit Energie von einem Elektromotor betrieben werden kann, der von einer Batterieeinheit als Energieversorgung angetrieben wird, aufweisend:
eine Kühllufterzeugungseinheit zum Erzeugen von Kühlluft um die Batterieeinheit zu kühlen; und
eine Luftvolumensteuerungseinheit zum Steuern der Kühllufterzeugungseinheit, so dass ein vorbestimmtes Volumen von Kühlluft, das sich in Übereinstimmung mit einer Fahrgeschwindigkeit des Fahrzeugs ändert,
**dadurch gekennzeichnet, dass**
beim Verlangsamen des Fahrzeugs, das in einem Modus niedriger Rückgewinnungseffektivität von zwei Modi betrieben wird, die sich hinsichtlich der Rückgewinnungseffektivität unterscheiden, mit der Rückgewinnungsenergie, die von dem Elektromotor erhalten wird, wenn das Fahrzeug verlangsamt wird, zu der Batterie zurückgegeben wird, die Luftvolumensteuerungseinheit die Kühllufterzeugungseinheit so steuert, dass ein Volumen von Kühlluft erzeugt wird, das durch Multiplizieren des vorbestimmten Volumens mit einem ersten Korrekturfaktor erhalten wird, der sich in Übereinstimmung mit einer Fahrgeschwindigkeit des Fahrzeugs unterscheidet, und
die Luftvolumensteuerungseinheit beim Verlangsamen des Fahrzeugs, das in einem Modus hoher Rückgewinnungseffektivität betrieben wird, die Kühllufterzeugungseinheit so steuert, dass das vorbestimmte Volumen an Kühlluft oder ein Volumen an Kühlluft erzeugt wird, das durch Multiplizieren des vorbestimmten Volumens mit einem zweiten Korrekturfaktor, der größer ist als der erste Korrekturfaktor, erhalten wird.

3. Vorrichtung zum Kühlen einer Batterieeinheit gemäß Anspruch 1, wobei entweder der Modus hoher Rückgewinnungseffektivität oder der Modus niedriger Rückgewinnungseffektivität durch eine Bedienung des Fahrers eingestellt wird.

4. Vorrichtung zum Kühlen einer Batterieeinheit gemäß Anspruch 2, wobei entweder der Modus hoher Rückgewinnungseffektivität oder der Modus niedriger Rückgewinnungseffektivität durch eine Bedienung des Fahrers eingestellt wird.

5. Vorrichtung zum Kühlen einer Batterieeinheit gemäß Anspruch 1, wobei das Fahrzeug eine Verbrennungskraftmaschine umfasst, die eine Antriebswelle hat, welche direkt mit einer Antriebswelle des Elektromotors verbunden ist.

6. Vorrichtung zum Kühlen einer Batterieeinheit gemäß Anspruch 2, wobei das Fahrzeug eine Verbrennungskraftmaschine umfasst, die eine Antriebswelle hat, welche direkt mit einer Antriebswelle des Elektromotors verbunden ist.

## Revendications

1. Appareil de refroidissement d'unité de batterie installé dans un véhicule qui peut se déplacer grâce à l'énergie d'un moteur électrique entraîné par une unité de batterie en tant que source d'alimentation, comprenant :
une unité de génération d'air de refroidissement permettant de générer de l'air de refroidissement pour refroidir l'unité de batterie ; et
une unité de commande de volume d'air permettant de commander l'unité de génération d'air de refroidissement, **caractérisé en ce que**
l'unité de commande de volume d'air commande, lors de la décélération du véhicule qui est réglé pour fonctionner dans un mode de haut rendement de récupération parmi deux modes qui diffèrent en rendement de récupération avec lesquels l'énergie régénératrice obtenue du moteur électrique lorsque le véhicule décélère est récupérée par la batterie, l'unité de génération d'air de refroidissement de façon à générer un plus grand volume d'air de refroidissement qu'un volume d'air de refroidissement généré lorsque le véhicule est réglé pour fonctionner dans un mode de bas rendement de récupération.

2. Appareil de refroidissement d'unité de batterie installé dans un véhicule qui peut se déplacer grâce à l'énergie d'un moteur électrique entraîné par une unité de batterie en tant que source d'alimentation, comprenant :
une unité de génération d'air de refroidissement permettant de générer de l'air de refroidissement pour refroidir l'unité de batterie ; et
une unité de commande de volume d'air permettant de commander l'unité de génération d'air de refroidissement de façon à générer un volume prédéterminé d'air de refroidissement qui diffère en conformité avec une vitesse de déplacement du véhicule, **caractérisé en ce que**
l'unité de commande de commande de volume d'air commande, lors de la décélération du véhicule qui est réglé pour fonctionner dans un mode de bas rendement de récupération parmi deux modes qui diffèrent en rendement de récupération avec lesquels l'énergie régénératrice obtenue du moteur électrique lorsque le véhicule décélère est récupérée par la batterie, l'unité de génération d'air de refroidissement de façon à générer un volume d'air de refroidissement qui résulte de la multiplication du volume prédéterminé par un premier facteur de correction qui diffère en conformité avec une vitesse de déplacement du véhicule, et
l'unité de commande de volume d'air commande, lors de la décélération du véhicule qui est réglé pour fonctionner dans un mode de haut rendement de récupération, l'unité de génération d'air de refroidissement de façon à générer le volume prédéterminé d'air de refroidissement ou un volume d'air de refroidissement qui résulte de la multiplication du volume prédéterminé par un second facteur de correction qui est plus grand que le premier facteur de correction.

3. Appareil de refroidissement d'unité de batterie selon la revendication 1, dans lequel
l'un du mode de haut rendement de récupération et du mode de bas rendement de récupération est réglé par l'intermédiaire d'une opération par le conducteur.

4. Appareil de refroidissement d'unité de batterie selon la revendication 2, dans lequel
l'un du mode de haut rendement de récupération et du mode de bas rendement de récupération est réglé par l'intermédiaire d'une opération par le conducteur.

5. Appareil de refroidissement d'unité de batterie selon la revendication 1, dans lequel
le véhicule inclut un moteur à combustion interne ayant un arbre d'entraînement couplé directement à un arbre d'entraînement du moteur électrique.

6. Appareil de refroidissement d'unité de batterie selon la revendication 2, dans lequel
le véhicule inclut un moteur à combustion interne ayant un arbre d'entraînement couplé directement à un arbre d'entraînement du moteur électrique.
